# EUROPÄISCHE PATENTANMELDUNG

(11) **EP 2 422 600 A2**
(43) Veröffentlichungstag der Anmeldung: **29.02.2012**
(21) Anmeldenummer: 11401577.9
(22) Anmeldetag: 22.08.2011
(51) Int. Cl.: A01C 7/08

(54) **Pneumatisch beaufschlagter Saatgutführungskanal**

(30) Priorität: 31.08.2010 DE 102010037239
(71) Anmelder: Amazonen-Werke H. Dreyer GmbH & Co. KG, 49205 Hasbergen (DE)
(72) Erfinder: Fankhauser, Carlos Fernando, 27798 Hude (DE); Pokriefke, Michael, 27798 Hude (DE); Tiessen, Reimer Uwe, 26135 Oldenburg (DE)

(57) **Zusammenfassung**

Pneumatisch beaufschlagter Saatgutführungskanal eine Sächares einer Sämaschine, insbesondere Einzelkornsämaschine, der im Bereich des Sächares eine entgegen der Fahrtrichtung ausgerichtete Krümmung aufweist, und eine entgegen der Fahrtrichtung weisende Ausmündungsöffnung besitzt, wobei der Saatgutführungskanal im Bereich des Sächares zumindest eine Luftauslassöffnung in seiner Wandlung aufweist, wobei das Säschar zwei V-förmig zueinander angestellte Scharscheiben aufweist. Um eine verbesserte Anordnung eines Saatgutführungskanales in einem beengten Bauraum zwischen Scharscheiben zu ermöglichen, ist vorgesehen, dass die seitlichen Außenflächen des Saatgutführungskanals zumindest im oberen Bereich der Scharscheiben des Sächares an den Verlauf der Innenseite der Scharscheiben zumindest annähernd angepasst verlaufend ausgebildet sind.

## Beschreibung

Die Erfindung betrifft einen pneumatisch beaufschlagten Saatgutführungskanal gemäß des Oberbegriffes des Patentanspruches 1.

Ein derartig pneumatisch beaufschlagter Saatgutführungskanal ist durch die DE 10 2007 051 702 A1 bekannt. Dieser pneumatisch beaufschlagte Saatgutführungskanal ist zwischen den V-förmig zueinander angeordneten Scharscheiben eines Doppelscheibenschares angeordnet. Der Saatgutführungskanal ist in Fahrtrichtung gesehen hinter der Drehachse der Scharscheiben des Säschares angeordnet. Hier ist noch ein relativ großer Bauraum vorhanden, um den Saatgutführungskanal anordnen zu können. Soll nun der Saatgutführungskanal in dem Raum zwischen den Scharscheiben vor der Drehachse der Scharscheiben angeordnet werden, steht nur noch sehr wenig Bauraum zur Verfügung.

Der Erfindung liegt die Aufgabe zu Grunde, eine verbesserte Anordnung eines Saatgutführungskanales in einem beengten Bauraum zwischen den beiden Scharscheiben des Säschares zu ermöglichen.

Diese Aufgabe wird erfindungsgemäß dadurch gelöst, dass die seitlichen Außenflächen des Saatgutführungskanals zumindest im oberen Bereich der Scharscheiben des Sächares an den Verlauf der Innenseite der Scharscheiben zumindest annähernd angepasst verlaufend ausgebildet sind.

Infolge dieser Maßnahmen wird es in einfacher Weise ermöglicht, den Saatgutführungskanal auch unter beengten Bauverhältnissen in einem Doppelscheibenschar zwischen den beiden Scharscheiben anordnen zu können. Hierbei wird eine zu großer Verstopfungsgefahr vermieden und eine gute Führung des Saatgutes durch den Saatgutführungskanal bis auf den grund der Säfurche gewährleistet.

Um eine vorteilhafte Anpassung des Saatgutführungskanales an die Bauraumverhältnisse sowie eine gute Saatgutführungskanal gewährleisten, ist vorgesehen, dass der Saatgutführungskanal zumindest im oberen Bereich der Scharscheiben des Sächares im Querschnitt V-förmig ausgebildet ist.

Um eine gute Saatgutablage ohne ein zu großes verspringen der in der Säfurche abzulegenden Saatkörner zu gewährleisten, ist vorgesehen, dass der Saatgutführungskanal im oberen Bereich der Scharscheiben des Sächares eine Luftauslassöffnung aufweist.

Um ein gutes und störungsfreies entweichen zumindest eines Teiles der Förderluft zu erreichen, ist vorgesehen, dass an die Luftauslassöffnung sich ein nach hinten - unten abgebogener Luftauslasskanal anschließt, der nach hinten innerhalb des von den Scharscheiben begrenzten Bereiches ausmündet.

Es sei an dieser Stelle darauf hingewiesen, dass es denkbar ist, dass der Saatgutführungskanal nicht über die gesamte Länge innerhalb des Scharbereiches als geschlossene Leitung ausgebildet ist, sondern zumindest in Teilbereichen, und zwar in dem Bereich, in dem der Saatgutführungskanal sich im Scharscheibenbereich befindet, auf der Krümmung abgewandten Seite zumindest teilweise als offene Leitung ausgebildet ist. Durch den offenen Bereich dieser Leitung kann dann ein Teil der Förderluft entweichen.

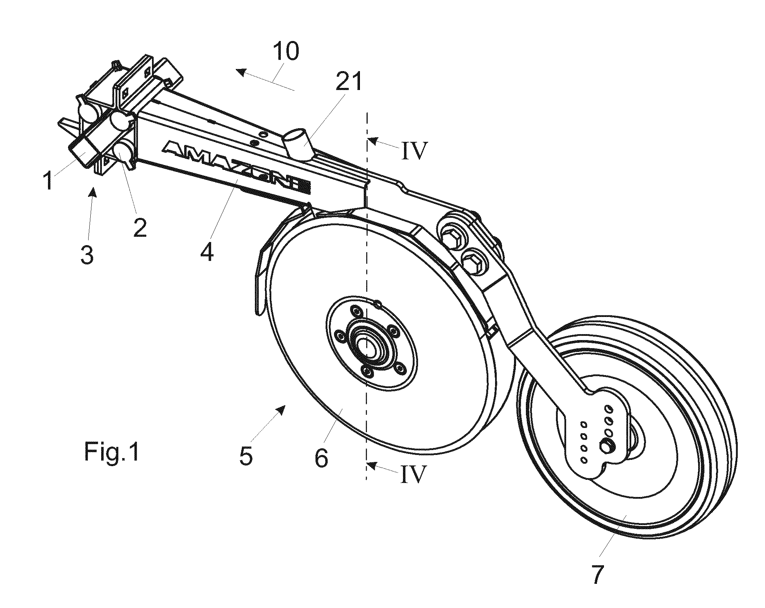

Weitere Einzelheiten der Erfindung sind der Beispielsbeschreibung und den Zeichnungen zu entnehmen. Hierbei zeigen
- Fig. 1: das Doppelscheibenschar in perspektivischer Darstellung,
- Fig. 2: das Doppelscheibenschar in perspektivischer Darstellung, wobei die in Fahrtrichtung linke Scharscheibe des Doppelscheibenschares abgenommen ist, und in verkleinerter Darstellung,
- Fig. 3: das Doppelscheibenschar in Seitenansicht, wobei die in Fahrtrichtung linke Scharscheibe des Doppelscheibenschares abgenommen ist, und in verkleinerter Darstellung,

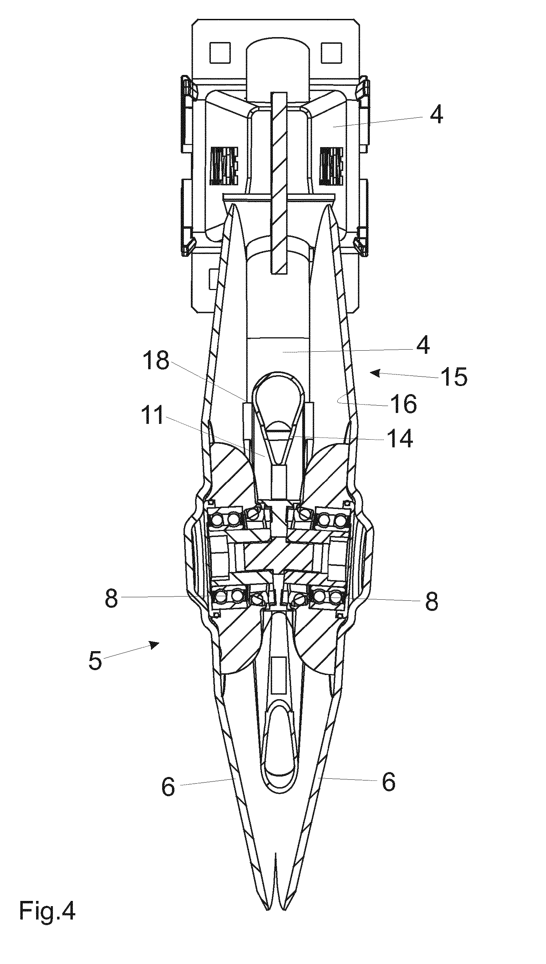

- Fig. 4: das Doppelscheibenschar im Schnitt IV - IV,
- Fig. 5: das Doppelscheibenschar im Schnitt V - V,
- Fig. 6: den zwischen den beiden Scharscheiben des Doppelscheibenschares angeordneten Saatgutführungskanal in perspektivischer Darstellung,
- Fig. 7: den zwischen den beiden Scharscheiben des Doppelscheibenschares angeordneten Saatgutführungskanal in Seitenansicht,
- Fig. 8: den Saatgutführungskanal in der Ansicht von hinten,
- Fig. 9: den Saatgutführungskanal im Schnitt IX - IX,
- Fig. 10: den Saatgutführungskanal im Schnitt X - X und
- Fig. 11: den Saatgutführungskanal im Schnitt XI - XI.

An dem sich quer zur Fahrtrichtung erstreckende Tragbalken 1 des Rahmens der Sämaschine, insbesondere einer Einzelkornsämaschine sind über die Gummilagerelemente 2 des Gelenkes 3 und der sich daran anschließende Scharhalter 4 des jeweiligen Doppelscheibenschares 5 angeordnet. Diesen Doppelscheibenscharen 5 wird über das sich im Vorratsbehälter der Sämaschine befindliche Saatgut über eine Dosier- und/oder Vereisungseinrichtung über pneumatische Beauftragte Saatgutleitung zugeführt. Die als Doppelscheibenschare 5 ausgebildeten Säschare legen die zugeführten Saatkörner in den von den Scharscheiben 6 der Doppelscheibenschare 5 in den Boden gezogenen Furchen ab. Hinter den Scharscheiben 6 ist eine Saatandruck- und Tiefenführungsrolle 7 angeordnet.

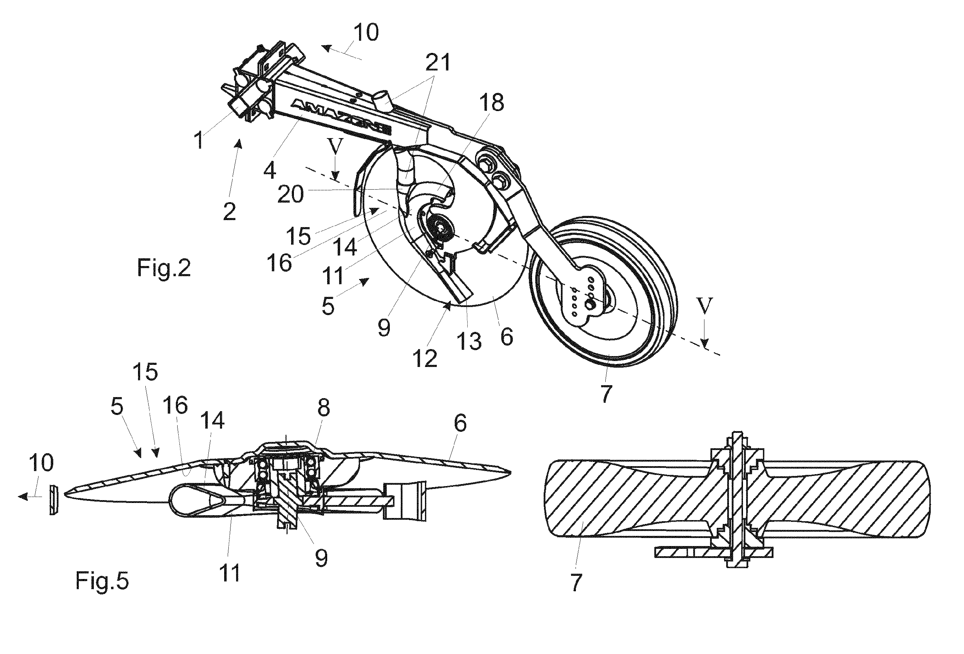

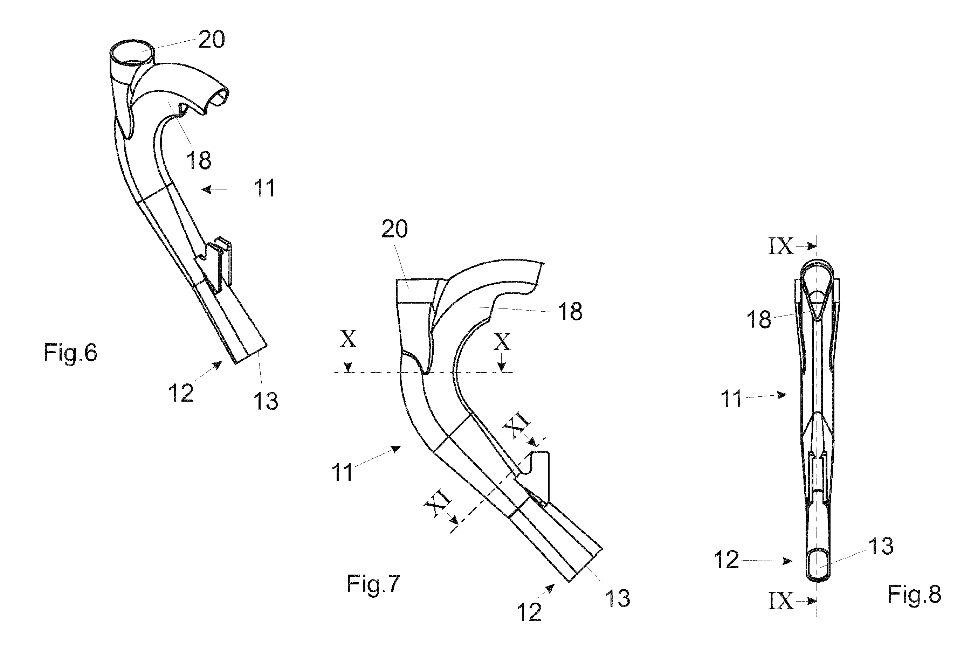

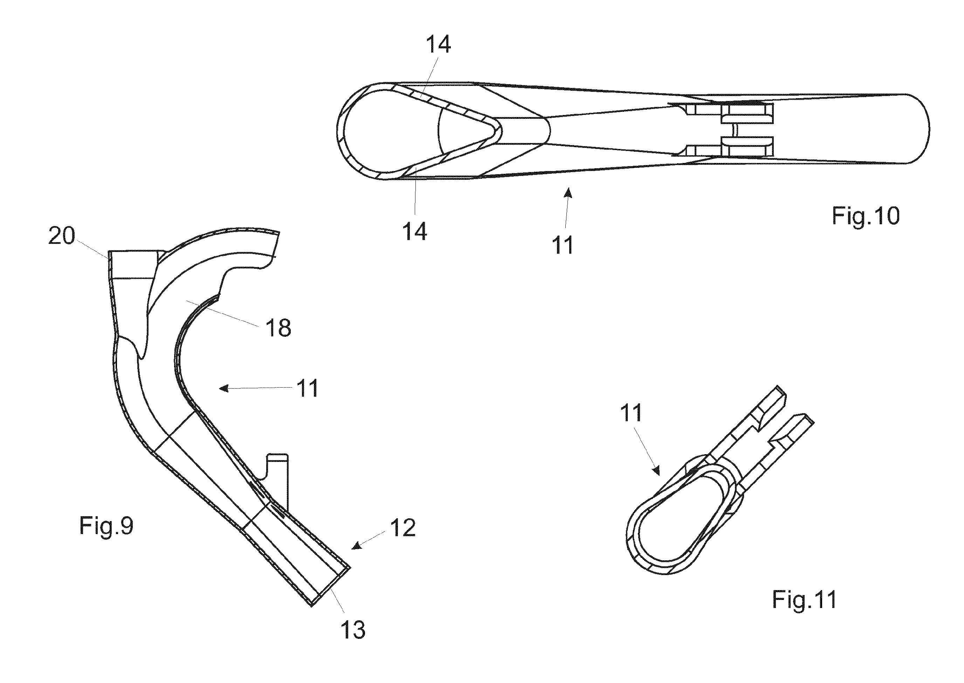

An dem Scharhalter 4 sind mittels Drehlagerungen 8 die beiden V-förmig zueinander angeordneten Scharscheiben 6 eines Doppelscheibenschares 5 frei drehbar angeordnet. Zwischen den beiden Scharscheiben 6 des Doppelscheibensäschares 5 ist vor der Drehachse 9 der Scharscheiben 6 ein eine entgegen der Fahrtrichtung 10 ausgerichtete Krümmung aufweisender pneumatisch beaufschlagter Saatgutführungskanal 11 angeordnet. Dieser Saatgutführungskanal 11 besitzt im unteren Bereich 12 eine entgegen der Fahrtrichtung 10 weisende Ausmündungsöffnung 13, durch welche die zugeführten Saatkörner austreten und in der von den Scharscheiben 6 geschaffenen Saatfurche abgelegt werden. Die seitlichen Außenflächen 14 des Saatgutführungskanales 11 sind zumindest im oberen Bereich 15 der Scharscheiben 6 des Sächares 5 an den Verlauf der Innenseiten 16 der Scharscheiben 6 zumindest annähernd angepasst verlaufend ausgebildet, wie insbesondere die Fig. 5 zeigt. Der Saatgutführungskanal 11 ist im oberen Bereich 15 der Scharscheiben 6 des Sächares 5 im Querschnitt V-förmig ausgebildet, vgl. Fig. 5, 8 und 10.

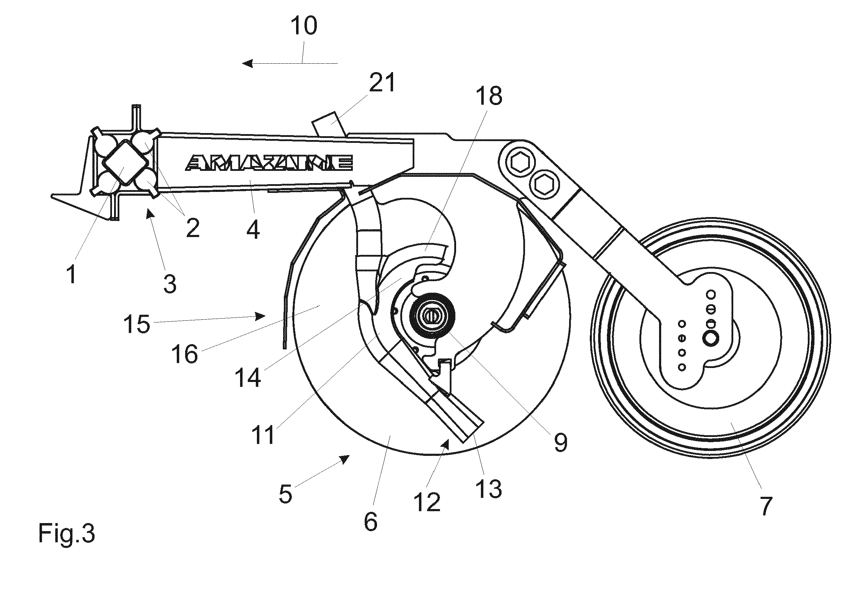

Weiterhin weist der Saatgutführungskanal 11 im oberen Bereich 15 der Scharscheiben 6 des Sächares 5 eine Luftauslassöffnung 17 auf. An die Luftauslassöffnung 17 schließt sich ein nach hinten - unten abgebogener Luftauslasskanal 18 an, der nach hinten - unten innerhalb des von den Scharscheiben 6 begrenzten Bereiches ausmündet, vgl. hierzu die Fig. 2, 3, 6, 7 und 9.

An das obere Ende 19 des Saatgutführungskanals 11 ist an den Einmündungsanschluß 20 des Saatgutführungskanales 11 die Saatgutleitung 21 angeschlossen.

## Patentansprüche

1. Pneumatisch beaufschlagter Saatgutführungskanal eine Sächares einer Sämaschine, insbesondere Einzelkornsämaschine, der im Bereich des Sächares eine entgegen der Fahrtrichtung ausgerichtete Krümmung aufweist, und eine entgegen der Fahrtrichtung weisende Ausmündungsöffnung besitzt, wobei der Saatgutführungskanal im Bereich des Sächares zumindest eine Luftauslassöffnung in seiner Wandlung aufweist, wobei das Säschar zwei V-förmig zueinander angestellte Scharscheiben aufweist, **dadurch gekennzeichnet, dass** die seitlichen Außenflächen (14) des Saatgutführungskanals (11) zumindest im oberen Bereich der Scharscheiben (6) des Sächares (5) an den Verlauf der Innenseite (16) der Scharscheiben (6) zumindest annähernd angepasst verlaufend ausgebildet sind.

2. Saatgutführungskanal nach Anspruch eins, **dadurch gekennzeichnet, dass** der Saatgutführungskanal (11) zumindest im oberen Bereich (15) der Scharscheiben (6) des Sächares (5) im Querschnitt V-förmig ausgebildet ist.

3. Saatgutführungskanal nach zumindest einem der vorstehenden Ansprüche, **dadurch gekennzeichnet, dass** der Saatgutführungskanal (11) im oberen Bereich (15) der Scharscheiben (6) des Sächares (5) eine Luftauslassöffnung (17) aufweist.

4. Saatgutführungskanal nach zumindest einem der vorstehenden Ansprüche, **dadurch gekennzeichnet, dass** an die Luftauslassöffnung (17) sich ein nach hinten - unten abgebogener Luftauslasskanal (18) anschließt, der nach hinten innerhalb des von den Scharscheiben (6) begrenzten Bereiches ausmündet.
